# FASCICULE DE BREVET EUROPEEN

(11) **EP 0 557 187 B1**
(45) Date de publication et mention de la délivrance du brevet: **16.07.1997**
(21) Numéro de dépôt: 93400394.8
(22) Date de dépôt: 17.02.1993
(51) Int. Cl.: G02B 6/44, G11B 23/023

(54) **Ensemble de modules plats articulés**
Zusammenbau von flachen Gelenkmodulen
Assembly of flat articulated modules

(30) Priorité: 21.02.1992 FR 9202031
(43) Date de publication de la demande: 25.08.1993
(73) Titulaire: ALCATEL CABLE INTERFACE, F-08330 Vrigne aux Bois (FR)
(72) Inventeur: Milanowski, Michel, F-95620 Parmain (FR); Vincent, Alain, F-77230 Juilly (FR)
(74) Mandataire: Buffiere, Michelle

(56) Documents cités:
- EP-A- 0 085 911
- WO-A-89/05989
- FR-A- 2 646 928
- US-A- 4 832 436

## Description

La présente invention concerne l'assemblage de modules superposables en un ensemble, ces modules étant rendus accessibles dans ledit ensemble par ouverture des modules autour d'un axe d'articulation prévu pour chacun d'eux. Elle porte sur un tel ensemble de modules empilés et articulés, dans lequel lesdits modules sont plus particulièrement des cassettes de lovage et éventuellement de raccordement de fibres optiques.

Ces cassettes sont des boîtes de lovage et de protection de fibres optiques et souvent également de protection de raccords des fibres optiques lovées. Elles sont utilisées pour le raccordement de différents câbles optiques ou d'un câble optique à des jarretières optiques. Chaque cassette est affectée à deux fibres à raccorder l'une ou l'autre ou de préférence à plusieurs fibres à raccorder individuellement à plusieurs autres fibres.

Plusieurs cassettes sont en général affectées au traitement de la totalité des fibres d'un ou de plusieurs câbles optiques à raccorder à un ou d'autres câbles optiques ou des jarretières dans un boîtier de raccordement. Elles sont empilées en un ensemble pour leur maintien avec un moindre encombrement dans le boîtier et sont montées articulées pour avoir accès à chacune d'elles, notamment pour des opérations de maintenance.

Le document FR-A- 2 646 928 décrit un tel ensemble de cassettes dans un boîtier de raccordement de câbles à fibres optiques. Selon ce document, l'ensemble de cassettes est monté en bout d'un plateau support sur lequel sont fixées les extrémités des câbles à raccorder. Ce plateau support est flanqué de joues latérales pour définir un espace protégé de transfert des fibres, laissées en surlongueur sur les extrémités des câbles, à l'ensemble des cassettes.

Dans cet ensemble les cassettes sont empilées en présentant un léger décalage l'une sur l'autre et sont articulées autour d'axes individuels décalés pareillement les uns des autres. A cet effet, chacune d'elles portent une paire de bras latéraux qui sont pivotants autour d'une paire d'axes d'articulation sur les joues latérales du plateau support. Chacune présente une course limitée possible en rotation relativement au plan du plateau support, pour sa mise en position d'ouverture transversalement au plateau support. Des moyens d'encliquetage temporaire sont prévus au niveau du couplage de chaque paire de bras sur sa paire d'axes d'articulation pour limiter cette course en rotation et définir une position d'ouverture.

Ces dispositions de couplage et d'ouverture des cassettes sont peu aisées à monter et conduisent surtout à une tenue peu stable des cassettes lors de leur ouverture ou lorsqu'elles sont ouvertes.

La présente invention a pour but de constituer un ensemble de modules plats articulés, du type de l'ensemble de cassettes précité, dont la tenue mécanique des modules individuels dans l'ensemble est améliorée et qui permet en fonction d'accès prévus sur chaque module et de l'agencement intérieur de ces modules de réaliser sélectivement l'articulation de chaque module sensiblement autour d'un premier bord ou de l'autre bord opposé de ce module.

Elle a pour objet un ensemble de modules plats articulés, comportant un support en U formé d'une base et de deux joues latérales, et une pluralité de modules plats munis chacun d'une paire de bras d'articulation et montés chacun pivotants autour d'axes d'articulation sur lesdites joues au moyen desdits bras d'articulation, entre une première position dite de fermeture pour laquelle ces modules sont sensiblement parallèles à la base dudit support et une deuxième position dite d'ouverture pour laquelle ces modules sont sensiblement orthogonaux à cette base, lesdits axes d'articulation étant étagés relativement à la base et décalés parallèlement à la base les uns par rapport aux autres, caractérisé en ce qu'il comporte des éléments individuels d'articulation montables chacun de manière amovible sur un module correspondant et présentant chacun une forme de U, dont les deux branches constituent ladite paire de bras d'articulation de ce module et dont la partie centrale est amoviblement accolable par sa face extérieure longitudinalement contre l'un de deux premiers bords opposés du module correspondant, s'étend sensiblement sur la hauteur de ce premier bord et est équipée de premiers moyens de maintien amovible de ladite partie centrale contre ledit premier bord correspondant, et en ce que chacun desdits premiers bords opposés de chacun desdits modules est équipé de deuxièmes moyens de maintien complémentaires desdits premiers moyens de maintien equipant chaque élément d'articulation pour permettre le montage amovible de cet élément d'articulation sur l'un ou l'autre desdits premiers bords opposés du module correspondant, en fonction d'accès prévus sur chaque module et de l'arrangement intérieur des modules.

L'ensemble présente en outre au moins l'une des caractéristiques additionnelles suivantes:
- lesdits premiers moyens de maintien sont une paire de pattes latérales et/ou au moins un évidement arrière sur l'élément d'articulation, et les deuxièmes moyens maintien une paire de pattes de réception et/ou au moins un doigt de retenue sur chaque premier bord;
- chaque module reçoit de manière amovible un élément de verrouillage sur le premier bord opposé à celui portant l'élément d'articulation, cet élément de verrouillage présentant des troisièmes moyens de maintien identiques aux premiers moyens, pour sa fixation amovible au module, et des pattes d'encliquetage et des ouvertures dites complémentaires des pattes d'encliquetage, pour son verrouillage sur l'élément de verrouillage identique porté par l'un et/ou l'autre des modules adjacents dans ledit ensemble;
- lesdits modules sont des cassettes de lovage et de raccordement de fibres optiques;
- chacune des cassettes a quatre accès possibles, pour lesdites fibres, situés sensiblement aux deux extrémités desdits deux premiers bords, et reçoit lesdites fibres par les deux accès, parmi ces quatre accès possibles, qui sont sur le premier bord opposé à celui portant l'élément d'articulation.

Les caractéristiques et avantages de la présente invention ressortiront de la description détaillée d'exemples de réalisation illustrés dans les dessins ci-annexés. Dans ces dessins:
- la figure 1 est une vue en perspective schématique d'un ensemble de cassettes, selon la présente invention, illustré avec l'une de ses cassettes dans une position d'ouverture,
- la figure 2 est une vue de dessus de l'une des cassettes de cet ensemble, montrée sans couvercle de fermeture,
- la figure 3 est une vue de dessus d'un élément dit d'articulation de l'une des cassettes dudit ensemble,
- la figure 4 est une vue de face de l'élément d'articulation de la figure 3,
- la figure 5 est une vue en coupe de l'élément d'articulation, faite selon la ligne V-V de la figure 4,
- la figure 6 est une vue de dessus d'un autre élément dit de verrouillage de l'une des cassettes dudit ensemble,
- la figure 7 est une vue de face de l'élément de verrouillage de la figure 6,
- les figures 8 et 9 sont deux vues en coupe de l'élément de la figure 7, selon les lignes VIII-VIII et IX-IX, montrant la fonction de cet élément avec un autre élément identique et adjacent,
- la figure 10 est une vue de côté, partiellement coupée, de l'ensemble de cassettes selon la figure 1, dont les cassettes sont pour une partie d'entre elles en position d'ouverture.

L'ensemble de modules plats articulés selon l'invention est en particulier constitué par des cassettes de fibres optiques 10 identiques les unes aux autres. Ces modules peuvent être des boîtiers plats autres que des cassettes optiques, qui sont assemblés en un ensemble de boîtiers conformément à la présente invention.

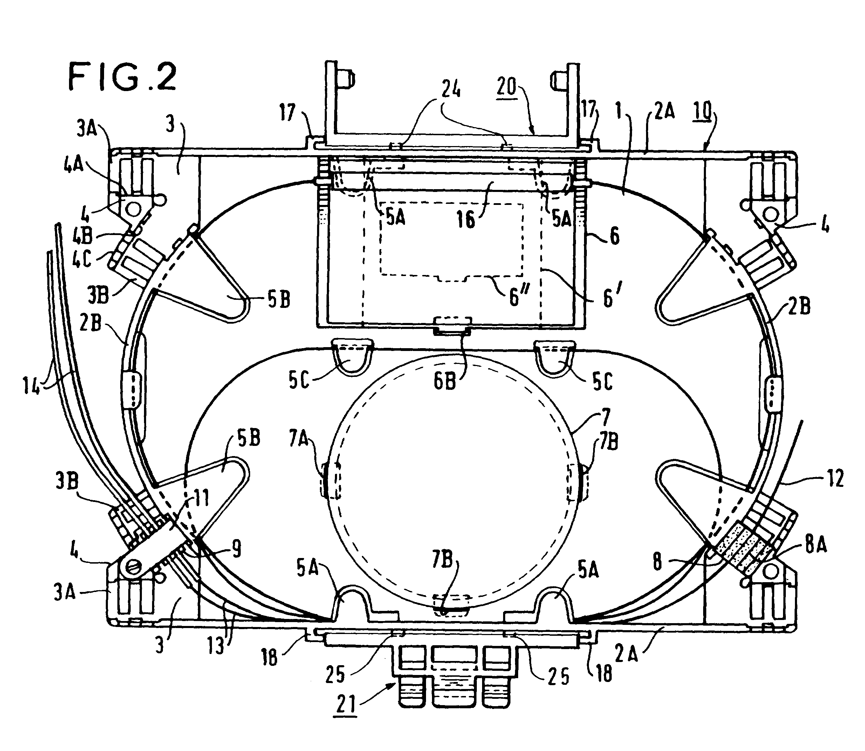

La cassette 10 est tout d'abord décrite en regard de la figure 2. Elle comporte un fond plat 1, sensiblement rectangulaire dont les petits côtés sont partiellement tronqués et arqués. Deux bords opposés et droits 2A et deux autres rebords opposés et arqués 2B entourent le fond. Leurs terminales définissent entre elles sur le fond, quatre accès 3 dits doubles, aux quatre coins du fond, pour les fibres reçues dans la cassette.

Des plots 4, saillants sur le fond 1 et centrés chacun dans chaque accès double, divisent chacun desdits accès doubles en deux canaux d'accès 3A et 3B. Ces plots sont de même hauteur que les rebords et de section sensiblement triangulaire. Deux faces latérales 4A et 4B de chaque plot sont en regard des parties terminales des rebords de chaque accès double et délimitent latéralement avec ces parties terminales chaque canal d'accès. Une excroissance 4C sur chaque plot prolonge sa face latérale 4B en regard de la partie terminale du rebord 2B, vers l'extérieur de la cassette.

Des pattes 5A, sur les rebords 2A, et 5B sur les rebords 2B s'étendent parallèlement au fond 1 sur l'intérieur de la cassette. Deux autres pattes 5C analogues aux pattes 5A sont saillantes sur le fond, sensiblement d'un côté de son axe longitudinal médian. Ces pattes 5A, 5B et 5C servent au maintien sous elles des fibres lovées dans la cassette.

Le fond 1 est en plastique et est moulé. Les rebords, les plots et les pattes proviennent de moulage avec le fond.

Le fond 1 est équipé d'un support 6, recevant et maintenant sur lui des raccords tels que 16 de fibres optiques, et d'un cylindre 7 de lovage des fibres. Tous deux sont montés amovibles côte à côte sur la largeur du fond dans sa partie médiane. Le support et le cylindre présentent à cet effet un jeu de pattes d'encliquetage, formé d'une patte élastique 6B sur l'un des bords du support et de deux autres pattes rigides sur son bord opposé, et d'une patte rigide 7A et d'une ou deux autres pattes élastiques 7B sur le cylindre. Le fond 1 présente quant à lui des jeux d'ouvertures non référencées, correspondant notamment au jeu de pattes de chacun de ces éléments, pour leur encliquetage.

Le support de raccords est choisi parmi différents supports possibles, pour différents raccords, comprenant le support 6 précité et d'autres supports 6' et 6" (figure 2). Le cyclindre 7 précité peut lui-même ne pas être utilisé, dans ce cas deux supports 6, 6', 6" peuvent être montés sur le fond. Différents jeux d'ouvertures sont initialement prévus sur le fond pour le montage sélectif de ces éléments 6, 6', 6" et 7 sur le fond et l'adaptation à la demande de la cassette résultante. Les pattes 5A et 5C peuvent être éliminées si nécessaire, pour l'adaptation souhaitée de la cassette.

Sur la cassette 10, deux des quatre accès doubles 3 sont sélectionnés, ainsi que l'un des deux canaux d'accès 3A et 3B de chaque accès double sélectionné, en fonction du mode d'utilisation de la cassette en garantissant un rayon minimal de courbure aux fibres arrivant dans la cassette.

Les deux canaux d'accès sélectionnés sont eux-mêmes équipés d'un élément d'un premier type 8 et/ou d'un deuxième type 9, de séparation unitaire en ligne et de tenue des fibres que chacun d'eux reçoit.

L'élément du premier type 8 est affecté à des fibres nues 12 et constitué par un pavé souple qui peut être monté et bloqué dans l'un quelconque des canaux d'accès. Il présente une série de fentes 8A qui s'étendent côte à côte sur la largeur du canal d'accès dans lequel il est monté et bloqué.

L'élément du deuxième type 9 est affecté à des fibres 13 initialement protégées dans des tubes individuels de gainage 14. Il est constitué par une pièce en U dont les branches en regard sont formées par une série de dents. Les dents définissent entre elles des fentes, en vis-à-vis d'une branche à l'autre et côte à côte sur la largeur de l'un quelconque des canaux d'accès dans lequel cet élément est monté et bloqué. Une patte 11, indépendante de l'élément 9 et du fond 1, est associée à cet élément. Elle est fixée par l'une de ses extrémités sur le plot 4 et s'étend sur l'élément 9 pour garantir le maintien de fibres tubées dans ses fentes. En variante les fibres tubées peuvent être retenues dans leur canal d'accès par un collier non représenté.

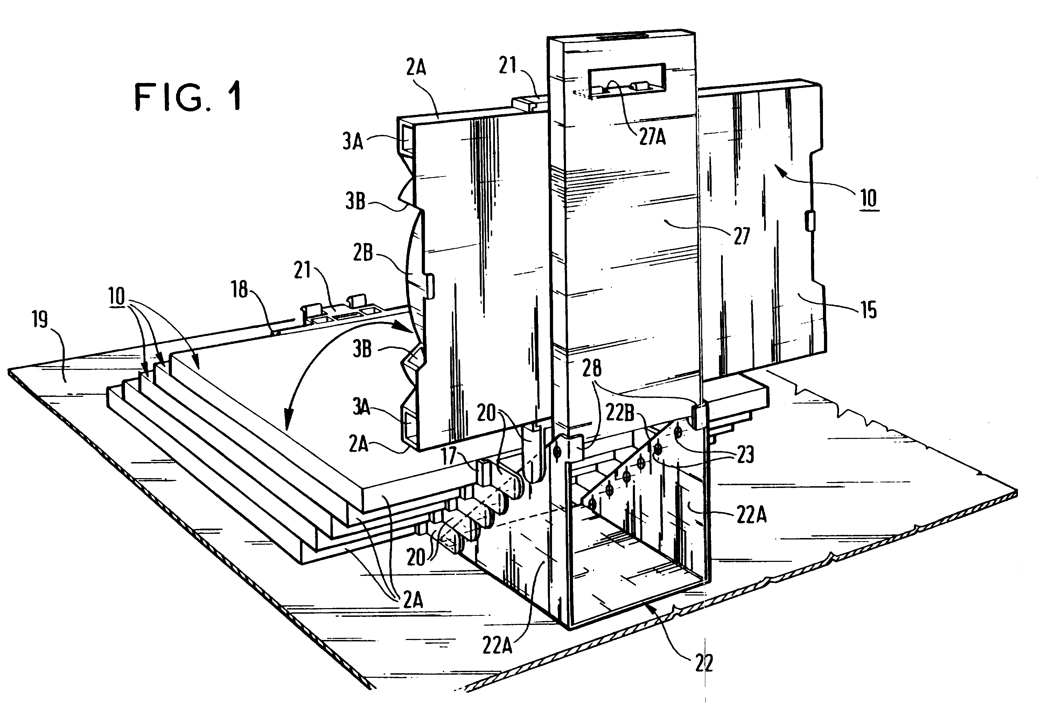

Un couvercle 15 (figure 1) rapporté sur les rebords 2A, 2B ferme la cassette 10 et protège l'ensemble des équipements de son fond et des canaux d'accès sélectionnés et équipés. Ces rebords 2A et 2B constituent les bords longitudinaux et latéraux de la cassette.

La cassette 10 comporte, en outre, pour son montage articulé et son verrouillage dans l'ensemble de la figure 1 une paire de pattes de maintien 17, 18 sur chacun de ses deux bords 2A. Ces deux paires de pattes sont saillantes extérieurement et prévues sur la hauteur des bords 2A. Les deux pattes de chaque paire sont en forme de cornière et en regard l'une de l'autre en étant symétriques par rapport à l'axe transversal médian du bord concerné.

En se référant à la figure 1 ou à la figure 2, on voit que l'ensemble des cassettes est formé sur un support plan de base 19. Le montage articulé de chaque cassette est réalisé par un élément individuel d'articulation 20, rapporté et fixé contre l'un des deux bords 2A, entre les pattes 17 ou 18 de ce bord. Un autre élément dit de verrouillage 21 des cassettes les unes sur les autres est rapporté et fixé contre l'autre des bords 2A de chaque cassette, entre les pattes 18 ou 17 de ce bord.

Les éléments d'articulation individuels 20 sont reçus dans les joues 22A d'un support rigide en U 22 pour constituer des articulations 23. Les joues 22A de ce support ont leurs bords 22B, en regard des cassettes, qui sont inclinés à 45° sur sa base. Les axes d'articulation 23 définis entre ces joues 22A sont étagés sur la hauteur des joues 22A, en étant au pas des cassettes superposées, et sont décalés en un alignement parallèle aux bords 22B. Les cassettes présentent ce même décalage entre elles.

Le support en U 22 est fixé sur le support de base 19. La première cassette au fond de l'empilement est de préférence solidarisée au support de base et rendue fixe sur ce dernier, dans une position dite de fermeture.

Une paire de doigts de retenue 24 ou 25 est saillante sur chaque bord 2A, en étant intérieure à la paire de pattes 17 ou 18, et assure la retenue sur elle de l'élément d'articulation 20 ou de l'élément de verrouillage 21.

En regard de la figure 2, on comprend aisément que les quatre accès doubles aux quatre coins de la cassette et les deux canaux d'accès de chacun d'eux permettent de sélectionner deux canaux d'accès pour les fibres, appartenant à deux des accès doubles eux-mêmes sélectionnés. De même l'assemblage articulé des cassettes le long de l'un de leurs bords 2A et leur verrouillage sur l'autre bord opposé sont réalisés sélectivement. L'assemblage articulé est réalisé sur celui des bords 2A auquel n'appartiennent pas les deux accès doubles 3 sélectionnés, lorsque les fibres arrivent le long des bords 2B dans les canaux d'accès 3A ou 3B.

Ainsi, l'axe d'articulation de chaque cassette de l'ensemble est à une distance des deux accès doubles sélectionnés, qui est sensiblement égale à la largeur de la cassette. Il en résulte que les fibres, par ailleurs retenues dans chaque canal d'accès sélectionné, ne subissent aucune sollicitation ou courbure excessive lors de l'ouverture de cette cassette dans l'ensemble constitué.

Sur la figure 1, on a en outre montré qu'un plateau de travail 27 est associé aux cassettes de l'ensemble et monté sur la cassette terminale supérieure. Il est reçu et articulé sur les branches du support en U 22 et est verrouillé sur l'élément de verrouillage 21 monté sur la cassette supérieure. Deux butées 28 sur les branches du support en U 22 définissent la position maximale d'ouverture du plateau de travail, sensiblement à 90° relativement au support de base 19. Elles définissent en conséquence la position d'ouverture des cassettes successives les unes contre les autres et contre le plateau de travail.

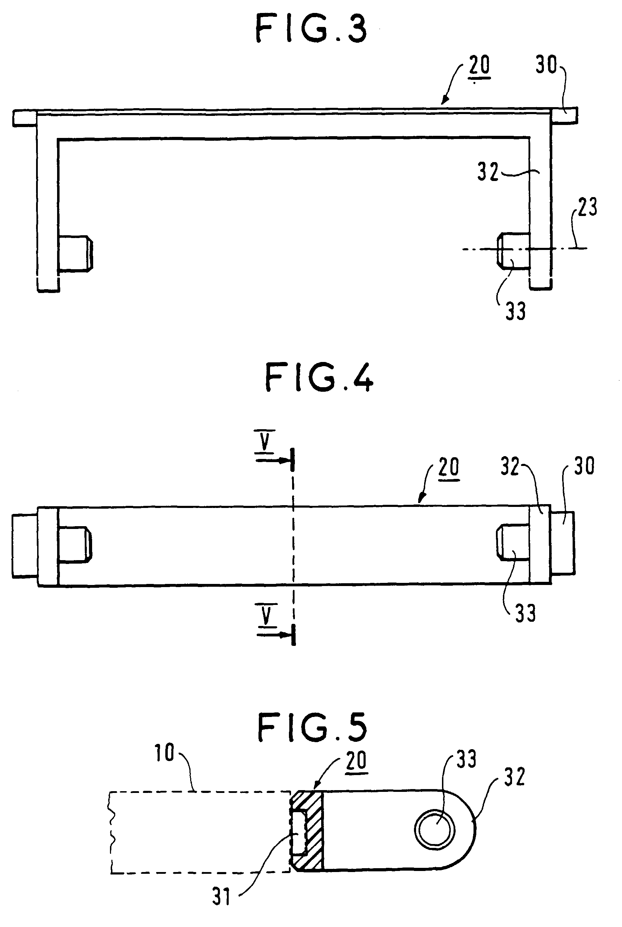

Les éléments individuels d'articulation 20 sont décrits en regard des figures 2 à 5 et de la figure 1 ou 2 pour leurs fonctions. Chacun d'eux est de longueur égale à la distance entre les pattes 17 ou 18 sur les cassettes et de hauteur pratiquement égale à celle des bords 2A. Il présente une forme de U, ayant une partie centrale et deux branches latérales et comporte:
- une paire de pattes latérales 30, qui prolonge de part et d'autre la partie centrale et est reçue dans la paire de pattes 17 de la cassette, en accolant la partie centrale de cet élément 20 contre le bord 2A de la cassette,
- un évidement 31 dans la partie centrale de l'élément 20, dans lequel se loge et se bloque chaque doigt de retenue 24,
- une paire de bras d'articulation 32 qui sont définis par les deux branches latérales de l'élément 20,
- une paire de doigts cylindriques 33, en vis-à-vis sur les faces intérieures des bras et proches de l'extrémité de chacun d'eux, qui sont rapportés et fixés sur les bras et définissent l'un des axes d'articulation sur le support en U 22.

Ces éléments d'articulation 20 assurent le couplage des cassettes de l'ensemble sur le support en U. Ce couplage est renforcé par les éléments de verrouillage 21 sur le bord opposé 2A.

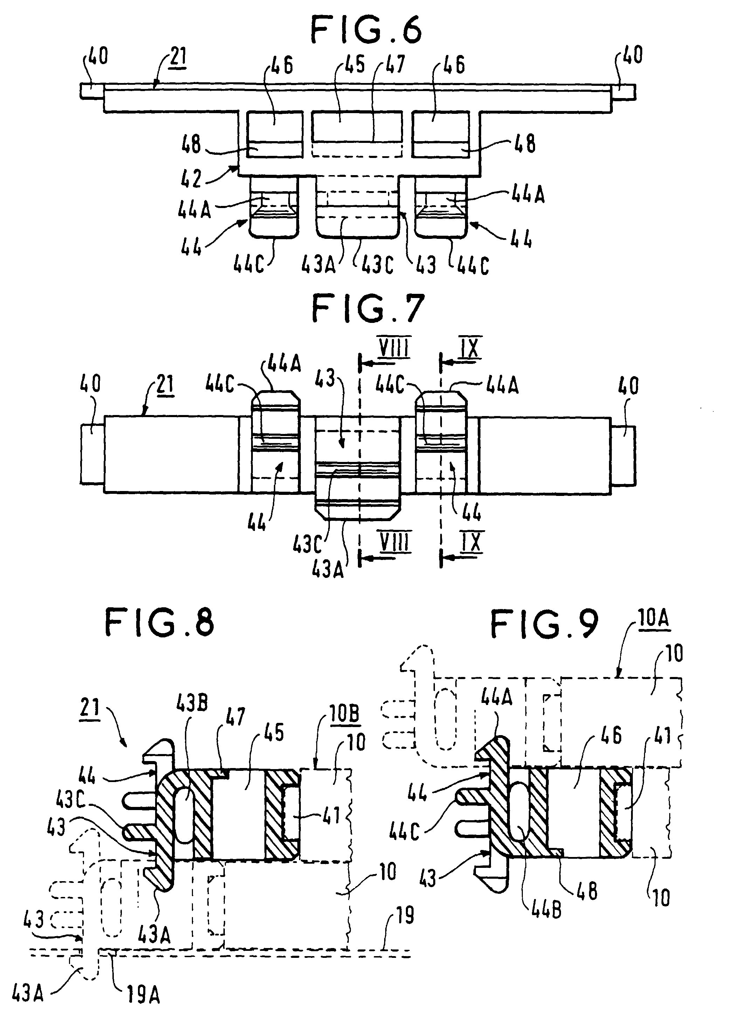

Ces éléments individuels de verrouillage 21 sont décrits en regard des figures 6 à 9 et de la figure 2 en ce qui concerne les fonctions assurées. Chacun d'eux est de même longueur que les éléments d'articulation 20. Il présente les mêmes dispositions que chacun des éléments d'articulation, pour son montage sur l'un ou l'autre des bords 2A de l'une quelconque des cassettes. Ce sont une paire de pattes latérales 40, reçue dans la paire de pattes 18, et des évidements 41 prévus sur la face dite arrière d'assemblage de cet élément contre le bord 2A concerné et recevant les doigts de retenue 25.

Il présente, pour la fonction de verrouillage de la cassette, qui porte l'élément 21 considéré, sur l'une et/ou l'autre des deux cassettes adjacentes, et pour une tenue renforcée des cassettes de l'ensemble, une partie médiane 42 d'épaisseur largement accrue, saillante sur sa face avant. Sur cette partie médiane 42, sont définies une patte centrale avant d'encliquetage 43, saillante sur l'un des bords, ici le bord inférieur de la partie médiane de l'élément, ainsi que deux pattes avant d'encliquetage 44, dites latérales, saillantes sur l'autre bord, dans cet exemple le bord supérieur de la partie médiane de l'élément. Ces pattes d'encliquetage ont une dent terminale en crochet, notée 43A, 44A, selon la patte, qui est tournée vers l'avant. Il leur correspond une ouverture centrale 45 et deux ouvertures latérales 46 sur la hauteur de cette partie médiane, entre les dents et la face d'assemblage. Il leur correspond également sur la face supérieure une patte d'accrochage 47, qui prolonge le pied de la patte 43 et est saillante dans l'ouverture centrale 45, et sur la face inférieure deux pattes d'accrochage 48, qui prolongent les pieds des pattes 44 et sont saillantes dans les ouvertures 46.

Un évidement 43B, situé à l'arrière de la patte 43 et ouvert sur la face inférieure de l'élément, et un évidement 44B, situé à l'arrière de chaque patte 44 et ouvert sur la face supérieure de l'élément, donnent l'élasticité requise aux pattes individuelles d'encliquetage. Des leviers individuels avant 43C ou 44C, selon les pattes, sont solidaires d'elles. Ils permettent l'actionnement de ces pattes pour leur dégagement de l'un ou l'autre des éléments de verrouillage identiques et adjacents.

Bien entendu des dispositions inverses, correspondant notamment à la patte d'encliquetage centrale saillante sur le bord avant supérieur, sont équivalentes à celles décrites.

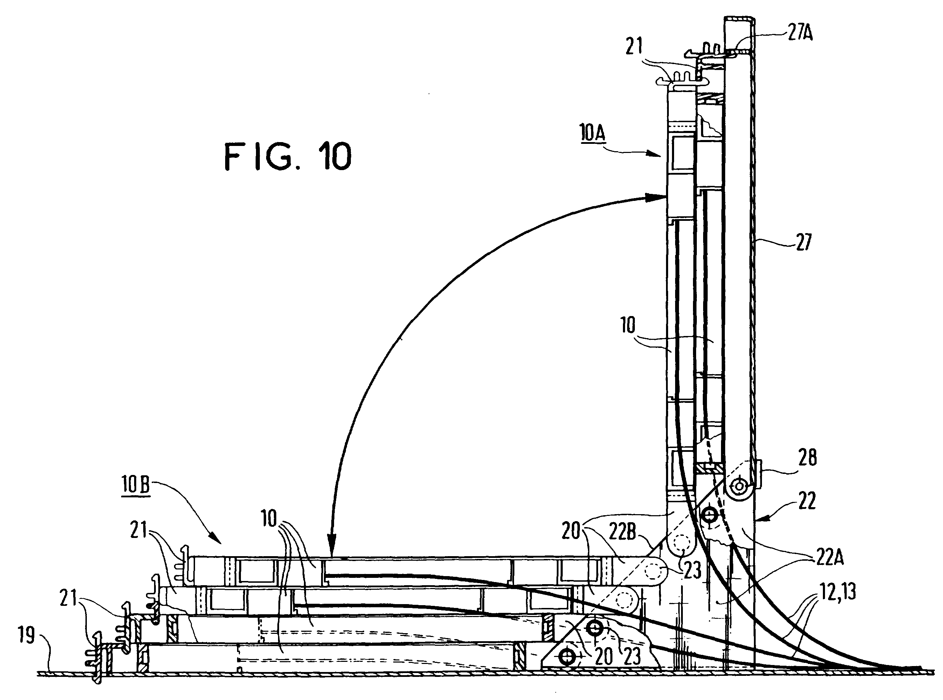

La figure 10 montre clairement l'assemblage articulé réalisé et l'obtention de la tenue stable des cassettes, que celles-ci soient en position d'ouverture ou de fermeture. On y a illustré un groupe 10A de cassettes supérieures 10 en position d'ouverture contre le plateau de travail 27 dans cette même position d'ouverture et le groupe 10B de cassettes inférieures 10 en position de fermeture sur le support de base 19.

La première cassette, au bas de l'ensemble et du groupe 10B est maintenue relativement au support de base 19 par son élément d'articulation 20 et son élément de verrouillage 21 opposés l'un à l'autre. En regard de la figure 8 également, on voit que la patte centrale d'encliquetage 43 de cet élément 21 est reçue et bloquée dans une ouverture correspondante 19A prévue dans le support de base. Les cassettes du même groupe 10B sont solidarisées les unes aux autres par leurs éléments individuels d'articulation 20 et le support en U 22, d'un côté, et par leurs éléments individuels de verrouillage 21 qui sont verrouillés les uns sur les autres de l'autre côté opposé.

De manière comparable dans le groupe 10A de cassettes en position d'ouverture, la cassette terminale supérieure est maintenue relativement au support de base 19 et au plateau de travail 27 par son élément d'articulation sur le support en U 22, d'un côté, et est verrouillée sur le plateau de travail par son élément de verrouillage de l'autre côté opposé. Ce plateau de travail 27 est un plateau plan dont les bords latéraux et le bord avant sont rabattus. Il présente deux ouvertures 27A sur son bord rabattu avant dans lesquelles sont reçues et s'accrochent les pattes d'encliquetage 44 de l'élément de verrouillage de cette cassette terminale.

Le plateau de travail est pareillement verrouillé sur la cassette terminale quand toutes les cassettes et le plateau de travail sont en position de fermeture.

Dans le groupe 10A des cassettes en position d'ouverture, les cassettes sont verrouillées les unes sur les autres par leurs éléments individuels 21.

Les leviers individuels permettent de libérer les éléments de verrouillage les uns des autres pour faire passer les cassettes d'un groupe à l'autre.

Dans cet ensemble, la partie centrale de chaque élément d'articulation en U est fermement appliquée et retenue directement contre et sur la hauteur de chaque cassette concernée. Un tel élément permet de définir de courtes liaisons entre la cassette et son axe d'articulation et assure une excellente tenue et stabilité de la cassette en cours d'ouverture ou de fermeture.
Les éléments 20 et 21 sont moulés. Ils sont peu fragiles mécaniquement. Ils sont de montage aisé et rapide sur les cassettes, et permettent de choisir le côté d'articulation des cassettes. Ils permettent aussi un assemblage rapide et aisé des cassettes ainsi équipées, pour la constitution de l'ensemble résultant. On note en outre dans l'ensemble que le support en U 22 est relativement étroit par rapport aux cassettes et affecté aux seules articulations des cassettes. Les fibres arrivent, par l'extérieur des branches de ce support en U et des petits côtés des cassettes, jusqu'aux accès équipés situés du côté du verrouillage et non des articulations. Elles sont ainsi très peu sollicitées lors de l'ouverture des cassettes.

## Revendications

1. Ensemble de modules plats articulés, comportant un support en U (22) formé d'une base et de deux joues latérales (22B), et une pluralité de modules plats (10) munis chacun d'une paire de bras d'articulation (32) et montés chacun pivotants autour d'axes d'articulation (23) sur lesdites joues au moyen desdits bras d'articulation, entre une première position dite de fermeture pour laquelle ces modules sont sensiblement parallèles à la base dudit support et une deuxième position dite d'ouverture pour laquelle ces modules sont sensiblement orthogonaux à cette base, lesdits axes d'articulation étant étagés relativement à la base et décalés parallèlement à la base les uns par rapport aux autres, caractérisé en ce qu'il comporte des éléments individuels d'articulation (20) montables chacun de manière amovible sur un module (10) correspondant et présentant chacun une forme de U, dont les deux branches constituent ladite paire de bras d'articulation (32) de ce module et dont la partie centrale est amoviblement accolable par sa face extérieure longitudinalement contre l'un de deux premiers bords opposés (2A) du module correspondant, s'étend sensiblement sur la hauteur de ce premier bord et est équipée de premiers moyens (30,31) de maintien amovible de ladite partie centrale contre ledit premier bord correspondant, et en ce que chacun desdits premiers bords opposés (2A) de chacun desdits modules est équipé de deuxièmes moyens de maintien (17, 24; 18, 25) complémentaires desdits premiers moyens de maintien équipant chaque élément d'articulation, pour permettre le montage amovible de cet élément d'articulation sur l'un ou l'autre desdits premiers bords opposés du module correspondant, en fonction d'accès prévus sur chaque module et de l'arrangement intérieur desdits modules.

2. Ensemble selon la revendication 1, caractérisé en ce que lesdits premiers moyens de maintien (30,31) de chaque élément d'articulation (20) comportent une paire de pattes latérales (30) sur la partie centrale dudit élément d'articulation, et lesdits deuxièmes moyens de maintien (17,24;18,25) de chaque module (10) comportent une paire de pattes de réception (17) saillantes sur chacun desdits premiers bords opposés, pour recevoir la paire de pattes latérales de l'élément d'articulation correspondant.

3. Ensemble selon l'une des revendications 1 et 2, caractérisé en ce que chacun desdits premiers et deuxièmes moyens de maintien comporte au moins un doigt saillant de retenue (24) et un évidement (31) pour chaque doigt, l'un sur ledit élément d'articulation et l'autre sur chacun desdits premiers bords.

4. Ensemble selon l'une des revendications 1 à 3, caractérisé en ce qu'il comporte en outre des éléments individuels de verrouillage (21) amovibles sur les modules, montables chacun sur l'autre des deux premiers bords opposés non sélectionné pour l'élément d'articulation et équipés chacun d'une part sur une face dite arrière de troisièmes moyens de maintien (40, 41), identiques auxdits premiers moyens (30, 31) et reçevables sur les deuxièmes moyens de maintien de cet autre premier bord du module concerné, d'autre part sur la face avant opposée de pattes d'encliquetage (43, 44) saillantes pour au moins l'une d'elles dite centrale, d'un côté et pour au moins une autre d'entre elles du côté opposé de l'élément de verrouillage considéré, et également d'ouvertures (45, 46) à l'arrière des pattes d'encliquetage et de pattes d'accrochage (47, 48) dans ces ouvertures respectives, pour le verrouillage de l'élément de verrouillage considéré sur chaque élément de verrouillage dit adjacent dans ledit ensemble.

5. Ensemble selon la revendication 4, caractérisé en ce qu'il comporte en outre un support plan de base (19) solidaire de ladite base dudit support en U (22), sur lequel le premier module, au fond de l'ensemble, est fixé par l'élément de verrouillage (21) monté sur ledit premier module.

6. Ensemble selon l'une des revendications 4 et 5, caractérisé en ce qu'il comporte en outre un plateau supérieur (27) monté sur le module terminal de l'ensemble et articulé sur lesdites joues (22A) du support en U (22), des butées (28) sur ledit support en U définissant une position maximale d'ouverture dudit plateau, et des moyens d'accrochage (27A) sur ledit plateau pour l'élément de verrouillage (21) dudit module terminal.

7. Ensemble selon l'une des revendications 1 à 6, caractérisé en ce que lesdits modules sont des cassettes de lovage et de raccordement de fibres optiques.

8. Ensemble selon la revendication 7, caractérisé en ce que chacune desdites cassettes (10) a quatre accès possibles (3), pour lesdites fibres, situés sensiblement aux extrémités des deux premiers bords opposés de la cassette, et est destinée à recevoir lesdites fibres par les deux accès de ces quatre accès possibles, qui sont sur le premier bord opposé à celui sélectionné pour porter l'élément d'articulation (20).

## Patentansprüche

1. Einheit von flachen, gelenkig gelagerten Moduln, mit einem U-förmigen Träger (22), der eine Basis und zwei seitliche Wangen (22B) besitzt, und mit mehreren flachen Moduln (10), die je zwei Schwenkarme (32) besitzen und um Schwenkachsen (23) auf den Wangen über die Schwenkarme schwenkbar montiert sind und zwischen einer ersten, geschlossenen Stellung, für die die Moduln im wesentlichen parallel zur Basis des Trägers liegen, und einer zweiten, offenen Stellung geschwenkt werden können, für die die Moduln im wesentlichen senkrecht zu dieser Basis liegen, wobei die Schwenkachsen bezüglich der Basis gestaffelt und parallel zur Basis zueinander verschoben sind, dadurch gekennzeichnet, daß die Einheit individuelle Schwenkelemente (20) aufweist, die je lösbar auf einem entsprechenden Modul (10) montiert werden können und U-förmig gestaltet sind, wobei die beiden Zweige des U die beiden Schwenkarme (32) des Moduls bilden, während der zentrale Bereich lösbar mit seiner Außenseite längsseits an einem der beiden ersten einander gegenüberliegenden Ränder (2A) des entsprechenden Moduls angelegt werden kann, sich im wesentlichen über die Höhe dieses ersten Randes erstreckt und mit ersten Mitteln (30, 31) zum lösbaren Halten des zentralen Bereichs gegen den entsprechenden ersten Rand versehen ist, und daß jeder der beiden einander gegenüberliegenden ersten Ränder (2A) jedes Moduls zweite Haltemittel (17, 24; 18, 25) aufweist, die zu den ersten Mitteln zum Halten an jedem Schwenkelement komplementär sind, um eine lösbare Montage dieses Schwenkelements auf dem einen oder anderen der beiden einander gegenüberliegenden ersten Ränder des entsprechenden Moduls abhängig von den auf jedem Modul vorgesehenen Zugängen und dem inneren Arrangement der Moduln zu erlauben.

2. Einheit nach Anspruch 1, dadurch gekennzeichnet, daß die ersten Haltemittel (30, 31) jedes Schwenkelements (20) zwei seitliche Laschen (30) auf dem zentralen Bereich des Schwenkelements und die zweiten Haltemittel (17, 24; 18, 25) jedes Moduls (10) zwei über jeden der ersten einander gegenüberliegenden Ränder vorstehende Laschen (17) aufweisen, die die beiden seitlichen Laschen des entsprechenden Schwenkelements aufnehmen.

3. Einheit nach einem der Ansprüche 1 und 2, dadurch gekennzeichnet, daß jedes der ersten und zweiten Haltemittel mindestens einen vorstehenden Haltefinger (24) und eine Vertiefung (31) für diesen Finger aufweist, wobei eines dieser Organe auf dem Schwenkelement und das andere auf den ersten Rändern angeordnet ist.

4. Einheit nach einem der Ansprüche 1 bis 3, dadurch gekennzeichnet, daß sie außerdem individuelle und lösbare Verriegelungselemente (21) auf den Moduln aufweist, die je auf dem anderen der beiden einander gegenüberliegenden Ränder, der nicht für das Schwenkelement ausgewählt wurde, montiert werden können und je einerseits auf einer rückwärtigen Seite dritte Haltemittel (40, 41), die den ersten Mitteln (30, 31) gleichen und von den zweiten Haltemitteln dieses ersten Rands des betreffenden Moduls empfangen werden können, und andererseits auf der entgegengesetzten Vorderseite vorspringende Rastlaschen (43, 44) aufweisen, von denen mindestens eine zentrale Rastlasche auf einer Seite und mindestens eine andere Rastlasche auf der gegenüberliegenden Seite des betreffenden Verriegelungselements vorsteht, wobei weiter Öffnungen (45, 46) hinter den Rastlaschen und Einrastlaschen (47, 48) in diesen jeweiligen Öffnungen für die Verriegelung des betreffenden Verriegelungselements auf jedem benachbarten Verriegelungselement in der Einheit vorgesehen sind.

5. Einheit nach Anspruch 4, dadurch gekennzeichnet, daß sie weiter einen ebenen Basisträger (19), der mit der Basis des U-förmigen Trägers (22) fest verbunden ist, enthält, auf dem der erste Modul am Grunde des Stapels durch das auf dem ersten Modul montierter Verriegelungselement (21) befestigt ist.

6. Einheit nach einem der Ansprüche 4 und 5, dadurch gekennzeichnet, daß sie außerdem eine obere Platte (27) aufweist, die auf dem obersten Modul des Stapels montiert ist und an den Wangen (22A) des U-förmigen Trägers (22) angelenkt ist, wobei Anschläge (28) auf dem U-förmigen Träger eine größte Öffnungsstellung der Platte definieren und Rastmittel (27A) auf der Platte für das Verriegelungselement (21) des letzten Moduls vorgesehen sind.

7. Einheit nach einem der Ansprüche 1 bis 6, dadurch gekennzeichnet, daß die Moduln Kassetten zum Aufschießen und Anschließen von Lichtleitfasern sind.

8. Einheit nach Anspruch 7, dadurch gekennzeichnet, daß jede Kassette (10) vier mögliche Zugänge (3) für die Fasern besitzt, die im wesentlichen an den Enden der beiden ersten einander gegenüberliegenden Seiten der Kassette liegen, und daß die Kassette die Fasern über die beiden Zugänge unter den vier möglichen Zugängen empfängt, die auf dem ersten Rand liegen, der dem für das Schwenkelement (20) ausgewählten Rand gegenüberliegt.

## Claims

1. An assembly of hinged flat modules, said assembly including a channel-section support (22) formed by a web and two side flanges (22B), and a plurality of flat modules (10) each provided with a pair of hinge arms (32) and each mounted to pivot about hinge pins (23) on said flanges by means of said hinge arms, between a "closed" first position for which the modules are substantially parallel to the base of said support and a "open" second position for which the modules are substantially orthogonal to said web, said hinge pins being stepped relative to the web and offset from one another parallel to the web, said assembly being characterized in that it includes individual hinge elements (20) each mounted in removable manner on a corresponding module (10) and each presenting a channel-section, and whose central portion is removably connected longitudinally by its outside face against one of two opposite first edges (2A) of the corresponding module, extended substantially over the height of said first edge and is fitted with first holding means (30, 31) for removably holding said central portion against said corresponding first edge whose two branches constitute said pair of hinge arms (32) of said module, and in that each of said opposite first edges (2A) of each of said modules is fitted with second holding means (17, 24; 18, 25) complementary to said first holding means fitted to each hinge element in order to allow said hinge element to be removably mounted on either of said opposite first edges of the corresponding module, as a function of access provided on each module and of the internal organization of the modules.

2. An assembly according to claim 1, characterized in that said first holding means (30, 31) of each hinge element (20) include a pair of side latches (30) on the central portion of said hinge element, and said second holding means (17, 24; 18, 25) of each module (20) include a pair of receiving catches (17) projecting from each of said opposite first edges, for receiving the pair of side latches of the corresponding hinge element.

3. An assembly according to claim 1 or 2, characterized in that each of said first holding means and said second holding means include at least one retaining finger (24) and one recess (31) for each finger, one on said hinge element and the other on each of said first edges.

4. An assembly according to any one of claims 1 to 3, characterized in that it further includes individual removable locking elements (21) on the modules, each locking element being mountable on the other of the two opposite first edges not selected for the hinge element and each locking element being fitted firstly with third holding means (40, 41) on its "rear" face, the third means being identical to the first means (30, 31) and being mounted on the second holding means of the other first edge of the module in question, secondly with snap-fastening catches (43, 44) on the "front" face of the locking element, at least a "central" one of the catches projecting from one side of the locking element in question, and at least one other of the catches projecting from the other side, and thirdly with openings (45, 46) behind the snap-fastening catches and fastening hooks (47, 48) inside the respective openings for locking the locking element in question onto each "adjacent" locking element in said assembly.

5. An assembly according to claim 4, characterized in that it further includes a plane base support (19) secured to said base of the channel-section support (22) on which the first module at the bottom of the assembly is fixed by means of the locking element (21) mounted on said first module.

6. An assembly according to claim 4 or 5, characterized in that it further includes a top plate (27) mounted on the last module in the assembly and hinged on said flanges (22A) of the channel-section support (22), abutments (28) on said channel-section support defining a fully-open position for said plate, and fastening means (27A) for fastening the locking element (21) of said last module onto said plate.

7. An assembly according to any one of claims 1 to 6, characterized in that said modules are cassettes for coiling and interconnecting optical fibers.

8. An assembly according to claim 7, characterized in that each of said cassettes (10) has four possible accesses (3) for said fibers, the accesses being situated substantially at the ends of the two opposite first edges of the cassette, and is designed to receive said fibers via two accesses of four possible accesses which are on the first edge opposite from that selected to carry the hinge element (20).
